## Europäisches Patentamt

## European Patent Office

## Office européen des brevets

(19)

(11) Veröffentlichungsnummer : **0 024 341**
**B1**

(12) **EUROPÄISCHE PATENTSCHRIFT**

(45) Veröffentlichungstag der Patentschrift :
**22.09.82**

(21) Anmeldenummer : **80104740.8**

(22) Anmeldetag : **11.08.80**

(51) Int. Cl.³ : **H 04 L 25/26**, H 03 K 17/78

(54) **Schaltungsanordnung zum Empfang von Gleichstromzeichen in Fernschreib- und Datenübertragungsanlagen.**

(30) Priorität : **21.08.79 DE 2933847**

(43) Veröffentlichungstag der Anmeldung :
**04.03.81 (Patentblatt 81/09)**

(45) Bekanntmachung des Hinweises auf die Patenterteilung : **22.09.82 Patentblatt 82/38**

(84) Benannte Vertragsstaaten :
**CH FR GB IT LI NL SE**

(56) Entgegenhaltungen :
**DE A 2 236 425**
**DE B 2 240 803**
**GB A 1 500 538**

(73) Patentinhaber : **SIEMENS AKTIENGESELLSCHAFT**
**Berlin und München**
**Postfach 22 02 61**
**D-8000 München 22 (DE)**

(72) Erfinder : **Eckel, Giselher, Dipl.-Ing.**
**64 Holly Cove**
**Mt. Laurel New Jersey 08054 (US)**

EP 0 024 341 B1

# Schaltungsanordnung zum Empfang von Gleichstromzeichen in Fernschreib- und Datenübertragungsanlagen

Die Erfindung betrifft eine Schaltungsanordnung zum Empfang von über eine Übertragungsleitung übertragene Gleichstromzeichen in Fernschreib- und Datenübertragungsanlagen unter Verwendung von Optokopplern zur galvanischen Trennung und einer in ihrem Schwellwertverhalten einstellbaren, dem Optokoppler nachgeschalteten Bewertungsschaltung.

Bei der Übertragung von Gleichstromzeichen über Leitungen, ist an der Empfangsstelle eine Bewertung der ankommenden Zeichen notwendig, wozu in der Regel Anordnungen mit einem einstellbaren Schwellwert verwendet werden. Auf diese Weise können die meist ungleichen Zeitkonstanten für einen Flankenanstieg und einen Flankenabfall berücksichtigt und damit Verzerrungen vermieden werden. Diese Forderung wird in vielen Fällen durch eine Schwellwertschaltung mit einer Hilfsspannung zur Einstellung des Schwellwertes erfüllt. Damit tritt dann aber das Problem einer Beeinflussung der Leitung auf, was beispielsweise durch die Verwendung einer erdfreien Hilfsspannung vermieden werden kann. Um den dadurch bedingten relativ großen Aufwand zu reduzieren, ist es bekannt, die galvanische Trennung, die beispielsweise mit Hilfe von Optokopplern erreicht wird, vor der eigentlichen Bewertung anzuordnen. Alle diese Forderungen, sowie die dazu bekannten Maßnahmen sind beispielsweise in der DE-AS 22 40 803 beschrieben.

Die dort beschriebene Anordnung erfüllt zwar die für Empfangsschaltungen gestellten Anforderungen in weitem Maße, doch ist bei Verwendung von Optokopplern zur galvanischen Trennung zwischen dem Bewertungskreis und der Leitung für ihren Einsatz Voraussetzung, daß die Optokoppler hinreichend genau arbeiten. Das ist jedoch nicht immer der Fall. So ändert sich die Durchlaßspannung der in Optokopplern verwendeten Leuchtdioden abhängig vom Durchlaßstrom und der Temperatur zum Teil erheblich. Weiterhin besitzen vor allem die sogenannten Transistorkoppler einen nichtlinearen Übertragungsfaktor, d.h. der Übertragungsfaktor ändert sich in diesem Falle in Abhängigkeit vom Diodendurchlaßstrom. Diese allgemein als Nichtlinearität der Koppelelemente bezeichneten Eigenschaften, führen zu Verzerrungen und begrenzen den Einsatz der bekannten Schaltung.

Aufgabe der Erfindung ist es, unter Beibehaltung der vorher beschriebenen Eigenschaften einer Empfangsschaltung, die mit der Nichtlinearität der als Übertragungsmittel verwendeten Optokoppler verbundenen Verzerrungen zu vermeiden. Diese Aufgabe wird gemäß der Erfindung dadurch gelöst, daß im vom Leitungsstrom durchflossenen und die Leuchtdiode des Optokopplers enthaltenden Empfangszweig mindestens eine Stromspiegelschaltung vorgesehen ist, wobei ein Transistor der Stromspiegelschaltung zur Leuchtdiode des Optokopplers in Reihe, und der andere Transistor dazu parallelgeschaltet ist, und deren Stromspiegelverhältnis durch einen im Emitterkreis eines der Transistoren der Stromspiegelschaltung angeordneten Widerstand einstellbar ist.

Der damit erreichte Vorteil besteht im wesentlichen darin, daß der Strom durch die Leuchtdiode des Optokopplers unabhängig von deren Durchlaßspannung wird. Weiterhin läßt sich das Stromspiegelverhältnis in einfacher Weise an einem Widerstand optimal auf die Eigenschaften der verwendeten Leuchtdiode einstellen.

Eine Ausgestaltung der Erfindung sieht zwei in einer Kaskadenschaltung angeordnete Stromspiegelschaltungen vor, was zu einer Reduzierung der Empfindlichkeit gegen Streuungen der Stromverstärkung der beiden für den Aufbau der Stromspiegelschaltung verwendeten Transistoren führt.

Gemäß einer weiteren Ausgestaltung der Erfindung, ist eine zusätzliche Rückkopplung zwischen dem Ausgangskreis des Optokopplers und der Stromspiegelschaltung vorgesehen, über die eine weitere Einstellung des Stromspiegelverhältnisses möglich ist. Man erreicht damit in besonders vorteilhafter Weise eine sehr genaue Einhaltung der eingestellten Übertragungseigenschaften.

Weitere Einzelheiten der Erfindung werden im folgenden anhand der Zeichnung erläutert. Es zeigen :

Figur 1 ein Ausführungsbeispiel mit einer Stromspiegelschaltung ;

Figur 2 ein Ausführungsbeispiel mit zwei in einer Kaskadenanordnung geschalteten Stromspiegelschaltungen und

Figur 3 ein Ausführungsbeispiel mit einer Rückkopplung zwischen dem Ausgang des Optokopplers und der Stromspiegelschaltung.

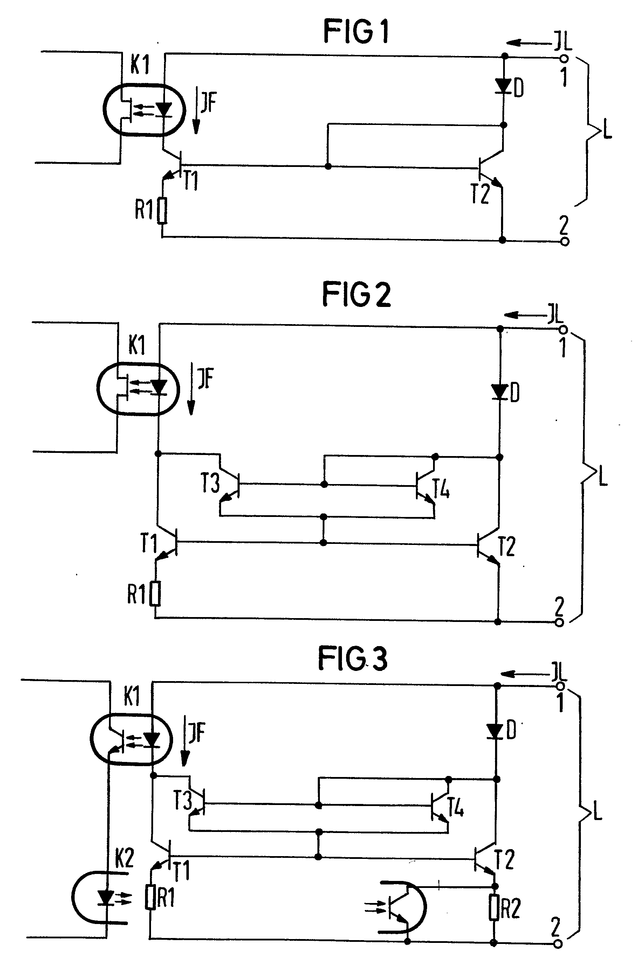

Das Ausführungsbeispiel nach Fig. 1 enthält den Optokoppler K1 zur galvanischen Trennung zwischen einer ankommenden Leitung L mit den beiden Adern 1 und 2 und einer hiernicht dargestellten Bewertungsschaltung. Die beiden Transistoren T1 und T2 bilden eine Stromspiegelschaltung. Stromspiegelschaltungen besitzen das Merkmal, daß ihr Ausgangsstrom durch den Eingangsstrom steuerbar ist, wobei normalerweise ein Verhältnis von 1 : 1 gewählt wird. Dieses Verhältnis, das auch als Stromspiegelverhältnis s bezeichnet wird, ist bei der erfindungsgemäßen Anordnung durch den Widerstand R1 einstellbar, wobei die Beziehung gilt :

$$IF = IL \cdot 1/1 + s.$$

Dabei ist mit IL der auf der Leitung L fließende Linienstrom, mit IF der die Diode des Optokopplers K1 durch fließende Diodenstrom und mit s das Stromspiegelverhältnis der Stromspiegelschaltung T1, T2 bezeichnet.

Die Diode D im Kollektorkreis des zwischen die Adern 1 und 2 geschalteten Transistors T2 der Stromspiegelschaltung stellt sicher, daß für den Betrieb der Diode des Optokopplers K1 stets eine ausreichende Spannung zur Verfügung steht. Bedarfsweise kann anstelle der Diode D1 auch eine Zenerdiode oder eine Reihenschaltung mehrerer Dioden verwendet werden.

Unter den für Stromspiegelschaltungen normalerweise vorgesehenen Bedingungen wird durch die Verbindung zwischen der Basis und dem Kollektor des Transistors T2 der Stromspiegelschaltung in beiden Transistoren T1 und T2 der gleiche Basisstrom erzeugt. Das ist deshalb der Fall, weil wie für Stromspiegelschaltungen normalerweise vorgesehen, beide Transistoren vom gleichen Typ sind und hinsichtlich ihrer Stromverstärkung den gleichen Wert besitzen. Eine Änderung des Verhältnisses s und damit eine Änderung der beiden Kollektorströme zueinander, wird durch die Einschaltung des Widerstandes R1, im Beispiel in die Emitterleitung des Transistors T1, erreicht. Die Einstellung des Widerstandes R1 und damit die Einstellung des Stromspiegelverhältnisses s, erfolgt dabei unter Beachtung der Eigenschaften der Diode des Optokopplers K1. Die durch die Eigenschaften der Diode des Optokopplers bedingten Nichtlinearitäten werden dadurch ausgeglichen.

Diese Funktionsweise trifft auch auf das in Fig. 2 dargestellte Ausführungsbeispiel zu, das im wesentlichen gleich aufgebaut ist, und dessen Bauteile mit den gleichen Bezugszeichen versehen sind. Im Unterschied zu der in Fig. 1 dargestellten Anordnung, ist hier jedoch eine zweite, die Transistoren T3 und T4 enthaltende Stromspiegelschaltung vorgesehen. Die beiden Stromspiegelschaltungen T1 und T2 bzw. T3 und T4 sind kaskadenförmig zusammengeschaltet. Dieses Beispiel ist besonders dann vorteilhaft, wenn die zum Aufbau einer Stromspiegelschaltung verwendeten Transistoren hinsichtlich des Wertes für ihre Stromverstärkung voneinander abweichen. Die Anordnung erweist sich als weitgehend unempfindlich gegenüber Streuungen dieses Wertes, so daß an die Auswahl der Transistoren nicht so hohe Anforderungen gestellt werden müssen, wie sie etwa für den Aufbau der Schaltung nach Fig. 1 gelten.

Für die Beispiele nach Fig. 1 und Fig. 2 ist davon ausgegangen worden, daß als Optokoppler sogenannte FET-Koppler verwendet werden. Diese haben den Vorteil, daß zwischen dem die Diode des Kopplers durchfließenden Strom und dem Widerstand des das Licht der Leuchtdiode bewertenden Empfangselementes, ein weitgehend linearer Zusammenhang besteht. Hier genügt somit eine Regelung für den Diodenstrom. Werden jedoch sogenannte Transistor-Optokoppler verwendet, so muß auch die Nichtlinearität der Übertragung zwischen der Eingangs- und der Ausgangsseite dieser Koppler berücksichtigt werden. Ein Ausführungsbeispiel, das diesem Umstand Rechnung trägt, ist in Fig. 3 dargestellt. Die dort gezeigte Anordnung enthält wiederum zwei Stromspiegelschaltungen mit den Transistoren T1 und T2 bzw. T3 und T4, wobei das Stromspiegelverhältnis wiederum durch den Widerstand R1 einstellbar ist. Zusätzlich ist hier nun noch ein weiterer Widerstand R2 vorgesehen, der im Emitterkreis des zweiten Transistors T2 derjenigen Stromspiegelschaltung angeordnet ist, in der die erste Einstellung des Stromspiegelverhältnisses erfolgt. Dieser Widerstand R2 ist dabei über eine Rückkopplung abhängig vom Ausgangsstrom des Optokopplers K2 steuerbar. Diese Rückkopplung kann, wie im Beispiel nach Fig. 3 dargestellt ist, durch einen zweiten zusätzlichen Koppler K2 erfolgen. Damit ist nun auch der Stromverstärkungsfaktor des anderen Transistors T2 der Stromspiegelschaltung veränderbar. Diese Anordnung bietet die Möglichkeit, die Nichtlinearitäten von Optokopplern in einem weiten Bereich auszugleichen.

Die Realisierung einer Stromspiegelschaltung kann durch die Verwendung von sogenannten Transistor-Arrays erfolgen. Gemäß einer vorteilhaften Ausgestaltung der Erfindung, können die Stromspiegelschaltung und die Optokoppler eine gemeinsame Schaltung bilden und in einem gemeinsamen Gehäuse untergebracht sein. Die Einstellung des Stromspiegelverhältnisses erfolgt dann über eine äußere Beschaltung, z.B. dadurch, daß die Widerstände R1 bzw. R1 und R2 außerhalb des Gehäuses angeordnet sind.

### Ansprüche

1. Schaltungsanordnung zum Empfang von über eine Übertragungsleitung übertragene Gleichstromzeichen in Fernschreib- und Datenübertragungsanlagen unter Verwendung von Optokopplern zur galvanischen Trennung und einer in ihrem Schwellwertverhalten einstellbaren, den Optokopplern nachgeschalteten Bewertungsschaltung, dadurch gekennzeichnet, daß im vom Leitungsstrom (IL) durchflossenen und die Leuchtdiode des Optokopplers (K1) enthaltenden Empfangszweig (1, 2) mindestens eine Stromspiegelschaltung (T1, T2) vorgesehen ist, in der ein Transistor (T1) zur Leuchtdiode des Optokopplers (K1) in Reihe und der andere Transistor (T2) an dieser Reihenschaltung parallel geschaltet ist und deren Stromspiegelverhältnis (s) durch einen im Emitterkreis eines der Transistoren (T1) der Stromspiegelschaltung angeordneten Widerstand (R1) einstellbar ist.

2. Schaltungsanordnung Anspruch 1, dadurch gekennzeichnet, daß zwei in einer Kaskadenschaltung angeordnete Stromspiegelschaltungen (T1, T2 ; T3, T4) vorgesehen sind, und daß der Widerstand (R1) zur Einstellung des Stromspiegelverhältnisses (s) nur in einer Stromspiegelschaltung (T1, T2) vorgesehen ist.

3. Schaltungsanordnung nach Anspruch 1 und 2, dadurch gekennzeichnet, daß zur Einstellung des Stromspiegelverhältnisses (s) neben dem im Emitterkreis eines der Transistoren (T1) einer Stromspiegelschaltung (T1, T2) angeordneten Widerstand (R1) ein weiterer Widerstand (R2) im Emitterkreis des anderen Transistors (T2) der gleichen Stromspiegelschaltung (T1, T2) geschaltet ist, und daß dieser Widerstand (R2) über eine Rückkopplung in Abhängigkeit vom Übertragungsfaktor des Optokopplers (K1) steuerbar ist.

4. Schaltungsanordnung nach Anspruch 3, dadurch gekennzeichnet, daß die Rückkopplung durch einen zweiten Optokoppler (K2) gebildet ist.

5. Schaltungsanordnung nach einem der Ansprüche 1 bis 4, dadurch gekennzeichnet, daß für die Transistoren (T1, T2 ; T3, T4) einer Stromspiegelschaltung ein Transistor-Array verwendet wird.

6. Schaltungsanordnung nach Anspruch 1, dadurch gekennzeichnet, daß für die beiden Optokoppler (K1, K2) im Empfangs- und im Rückkopplungszweig ein in einem Gehäuse angeordnetes Koppler-Array verwendet wird.

7. Schaltungsanordnung nach den Ansprüchen 5 und 6, dadurch gekennzeichnet, daß die Optokoppler (K1, K2) und die Stromspiegelschaltungen (T1, T2 ; T3, T4) in einem Gehäuse angeordnet sind, und daß die Schaltmittel (R1, R2) zur Einstellung des Stromspiegelverhältnisses (s) außerhalb des Gehäuses angeordnet sind.

## Claims

1. A circuit arrangement for receiving d.c. characters transmitted via a transmission line in teleprinting and data transmission systems, employing optocouplers for d.c. isolation and with an evaluation circuit which can be adjusted in respect of its threshold value behaviour connected following the optocouplers, characterised in that there is arranged in the receiving branch (1, 2) which is traversed by the conduction current (IL) and which contains the luminous diode of the optocoupler (K1) at least one current level circuit (T1, T2) in which a transistor (T1) is connected in series to the luminous diode of the optocoupler (K1) and the other transistor (T2) is connected in parallel to this series connection and whose current level ratio (s) can be adjusted by a resistor (R1) which is arranged in the emitter circuit of one of the transistors (T1) of the current level circuit.

2. A circuit arrangement as claimed in claim 1, characterised in that there are provided two current level circuits (T1, T2 ; T3, T4) which are arranged in a cascade circuit, and that the resistor (R1) is only arranged in one current level circuit (T1, T2) in order to adjust the current level ratio (s).

3. A circuit arrangement as claimed in claim 1 and 2, characterised in that in order to adjust the current level ratio (s), in addition to the resistor (R1) which is arranged in the emitter circuit of one of the transistors (T1) of a current level circuit (T1, T2) a further resistor (R2) is inserted into the emitter circuit of the other transistor (T2) of the same current level circuit (T1, T2), and that said resistor (R2) is controllable by means of a feedback coupling in dependence upon the transmission factor of the optocoupler (K1).

4. A circuit arrangement as claimed in claim 3, characterised in that the feedback coupling is formed by a second optocoupler (K2).

5. A circuit arrangement as claimed in one of claims 1 to 4, characterised in that a transistor array is used for the transistors (T1, T2 ; T3, T4) of a current level circuit.

6. A circuit arrangement as claimed in claim 1, characterised in that a coupler array arranged in a housing is used for the two optocouplers (K1, K2) in the receiving branch and in the feedback branch.

7. A circuit arrangement as claimed in one of claims 5 and 6, characterised in that the optocouplers (K1, K2) and the current level circuits (T1, T2 ; T3, T4) are arranged in a housing and that the switching means (R. R2) for adjusting the current level ratio (s) are arranged outside the housing.

## Revendications

1. Montage pour la réception de signaux en courant continu, transmis par des lignes de transmission, dans une installation pour téléscripteurs et pour la transmission de données, avec mise en œuvre d'optocoupleurs pour la séparation galvanique, et d'un circuit de pondération monté en aval des optocoupleurs et réglable du point de vue de sa valeur de seuil, caractérisé par le fait que dans la branche de réception (1, 2) qui est traversée par le courant de ligne (IL) et qui contient la diode luminescente de l'optocoupleur (K1), est prévu au moins un circuit dit à courants en rapport géométrique (T1, T2) dans lequel un transistor (T1) est monté en série avec la diode luminescente de l'optocoupleur (K1) et l'autre transistor (T2) est monté en parallèle sur ce montage série, et dont le rapport des courants en rapport géométrique est réglable par une résistance (R1) montée dans le circuit émetteur de l'un des transistors (T1) du circuit à courants en rapport géométrique.

2. Montage selon la revendication 1, caractérisé par le fait qu'il est prévu deux circuits à courants en rapport géométrique (T1, T2 ; T3, T4) en montage en cascade et que la résistance (R1) pour régler le rapport (s) entre les courants en rapport géométrique n'est prévue que dans un circuit à courants en rapport géométrique (T1, T2).

3. Montage selon la revendication 1 et 2, caractérisé par le fait que pour le réglage du rapport (s) des courants en rapport géométrique, on dispose, en plus de la résistance (R1) prévue dans le circuit d'émetteur de l'un des transistors (T1) d'un circuit à courants en rapport géométrique (T1, T2), une résistance supplémentaire (R2) dans le circuit d'émetteur de l'autre transistor (T2) du même circuit à courants en rapport géométrique (T1, T2), et que cette résistance (R2) est susceptible d'être commandée, par l'intermédiaire d'une contre-réaction, en fonction du facteur de transmission de l'optocoupleur (K1).

4. Montage selon la revendication 3, caractérisé par le fait que la contre-réaction est constituée par un second optocoupleur (K2).

5. Montage selon l'une des revendications 1 à 4, caractérisé par le fait que pour les transistors (T1, T2 ; T3, T4) d'un circuit à courants en rapport géométrique, on utilise un réseau de transistors.

6. Montage selon la revendication 1, caractérisé par le fait que pour les deux optocoupleurs (K1, K2) on utilise dans la branche de réception et dans la branche de la contre-réaction un réseau de coupleurs disposés dans un boîtier.

7. Montage selon les revendications 5 et 6, caractérisé par le fait que les optocoupleurs (K1, K2) et les circuits à courants en rapport géométrique (T1, T2 ; T3, T4) sont disposés dans un boîtier, et que les moyens de commutation (R1, R2) pour le réglage du rapport (s) entre les courants en rapport géométrique sont disposés à l'extérieur du boîtier.

# FIG 1

# FIG 2

# FIG 3